Europäisches Patentamt

(19) European Patent Office

Office européen des brevets

(11) Publication number : **0 384 898 B1**

(12) **EUROPEAN PATENT SPECIFICATION**

(45) Date of publication of patent specification :
20.07.94 Bulletin 94/29

(51) Int. Cl.⁵ : **C04B 28/06, C04B 16/06,
C04B 16/02**

(21) Application number : **90810130.6**

(22) Date of filing : **21.02.90**

(54) **Cementitious material for masonry constructions.**

(30) Priority : **24.02.89 GB 8904271**

(43) Date of publication of application :
**29.08.90 Bulletin 90/35**

(45) Publication of the grant of the patent :
**20.07.94 Bulletin 94/29**

(84) Designated Contracting States :
**AT BE CH DE ES FR GB IT LI**

(56) References cited :
EP-A- 0 127 960
EP-A- 0 220 649
EP-A- 0 222 339
EP-A- 0 270 075
EP-A- 0 312 323
DE-A- 2 547 908
DE-A- 2 749 642
GB-A- 2 547 908
US-E- 31 682
WPIL/DERWENT AN Nos 85-267380[43], 80-
15468C[09], 82-51153E[25], 84-316283[51]

(73) Proprietor : **SANDOZ AG**
**Lichtstrasse 35**
**CH-4002 Basel (CH)**
(84) **BE CH ES FR GB IT LI**
Proprietor : **SANDOZ-PATENT-GMBH**
**Humboldtstrasse 3**
**D-79539 Lörrach (DE)**
(84) **DE**
Proprietor : **SANDOZ-ERFINDUNGEN**
**Verwaltungsgesellschaft m.b.H.**
**Brunner Strasse 59**
**A-1230 Wien (AT)**
(84) **AT**

(72) Inventor : **Biagini, Stefano**
**Via Isola di Mezzo**
**I-31100 Treviso (IT)**
Inventor : **Collepardi, Mario**
**Viale Felissent 50**
**I-31050 Villorba (IT)**

## Description

The invention relates to cementitious compositions of aluminous cements.

According to the invention, there is provided the use as a cement paste or grout for cement injection into core walls or as jointing or rendering mortar for masonry constructions of a cementitious composition which is free of Portland cement and which comprises

a) 10-90% by weight of an aluminous cement which contains 30-85% combined $Al_2O_3$; and

b) 10-90 % by weight of a finely-ground natural or artificial pozzolan having a silica content of more than 30% by weight, a combined CaO content lower than 10% by weight and a free CaO content of less than 1% by weight.

Preferably, the cementitious composition further contains

c) 0.01-5 % by weight of organic fibres.

Aluminous cements are readily available on the market and preferably contain 30-85 % by weight of combined $Al_2O_3$ and 15-70 % of primarily $SiO_2$, $Fe_2O_3$. Usually the aluminous cements are derived from pulverising clinker comprising primarily hydraulic calcium aluminates.

Pozzolan is preferably as defined in ASTM C-618. Naturally-occurring finely ground pozzolan is preferably derived from volcanic sources or diatomaceous earth. Artificial pozzolans include fly ash, rice husk ash or silica fume. Preferably the pozzolan material contains 30 to 99 % (preferably 40 to 98 %) by weight $SiO_2$ and 1-10 % by weight combined CaO.

The terms "combined" $Al_2O_3$ and CaO as well as "free" CaO are well known in the art.

Preferably the organic fibres are 1 to 30 mm in length and preferably have a thickness of 1 to 100 $\mu$m. Preferably the fibres are synthetic or natural and are selected from polyacrylonitrile fibres, polyacrylic fibres, polyolefin fibres, polypropylene fibres, cellulose fibres and wool.

Preferably a cementitious composition according to the invention is free of $Ca(OH)_2$ and CaO. This alleviates quick setting where this is undesirable.

Further according to the invention there is provided a cement paste or grout or a jointing or rendering mortar for masonry constructions, mix comprising a cementitious composition hereinabove defined, sand and water having a ratio of water to cementitious composition of 0.2 to 1 and a ratio of sand to cementitious composition of 0.5 to 4.

Cementitious mixes according to the invention may include one or more chemical admixtures selected from

1) plasticizers
2) superplasticizers
3) air entraining agents
4) retarders
5) water reducers and
6) accelerators.

Preferably these admixtures are present in an amount of 0.1 to 10% based on the cementitious composition.

Still further according to the invention, there is provided a cement paste or grout for cement injection into core walls or a jointing or rendering mortar for masonry constructions comprising a cementitious composition as hereinabove defined and water, having a ratio of water to cementitious composition of 0.2 to 1.

Still further according to the invention there is provided a dry premixed mortar comprising a cementitious composition as hereinabove defined and aggregate, the ratio of aggregate to cementitious composition being in the range of 4:1 to 0.5:1, preferably 2.5:1 to 3.5:1.

Cementitious compositions for use in the invention can be mixed with water to form cement pastes or grouts for cement injection into the core walls of masonry constructions or can be mixed with sand and water to form a mortar for use as a jointing or rendering mortar for masonry constructions. Preferably the ratio of sand to cementitious composition according to the invention is from 1:1 to 4:1, preferably 2.5:1 to 3.5:1. In the case of fine sand, the ratio is most preferably 1.5:1 to 2:1 and for coarse sand from 2.5:1 to 3.5:1.

The appearance of the rendering mortar made with the cementitious compositions according to the invention advantageously does not form cracks that typically occur by one day plastic shrinkage when in the absence of wet curing. Compressive strength at early and later stages may be adjusted according to the requirement by changing the pozzolan/aluminous cement ratios. Finally, a mortar mix containing a cementitious composition according to the invention performs very well in contact with aggressive agents such as sulphates and chlorides.

The invention will now be illustrated by the following Examples in which all parts and percentages are by weight.

**Examples 1 to 9**

Cementitious mixes are prepared as given in Table 1 below.

The aluminous cement used has 75 % combined $Al_2O_3$ and 25 % CaO.

The volcanic earth (from the Naples area) is finely ground up to a specific surface area of 5000 cm²/g and contains $SiO_2$ (55 %), $Al_2O_3$ (20 %), $Fe_2O_3$ (5 %), CaO (5 %), MgO (1 %), $Na_2O$ (5 %) $K_2O$ (2 %) and loss on ignition 7 %.

The fly ash (commercially available from ENEL - Italy) used contains $SiO_2$ (45 %), $Al_2O_3$ (25 %), $Fe_2O_3$ (10 %), CaO (3 %), MgO (2 %), $K_2O$ (3 %); $SO_3$ (1 %) and loss on ignition (9 %).

The silica fume (commercially available from Elkem) used contains: $SiO_2$ (95 %), $Al_2O_3$ (0.5 %), $Fe_2O_3$ (0.3 %), CaO (0.2 %), MgO (0.2 %), $Na_2O$ (0.5 %), $K_2O$ (0.2 %), $SO_3$ (0.18 %) and loss on ignition 3 %.

The fibres used are 6 mm long and 15 μm thick.

## TABLE 1

| Example | Aluminous | Pozzolan | | | A-acrylonitrile fumeC-cellulosic |
| | | Volcanic cement | Fly ash earth | Silica | |
| --- | --- | --- | --- | --- | --- |
| 1 | 90.0 % | 9.9 % | --- | --- | 0.1 % A |
| 2 | 90.0 % | --- | 9.9 | --- | 0.1 % A |
| 3 | 90.0 % | --- | --- | 9.9 | 0.1 % A |
| 4 | 80.0 % | --- | 19.9 | --- | 0.1 % A |
| 5 | 30.0 % | --- | 69.9 | --- | 0.1 % A |
| 6 | 10.0 % | --- | 89.9 | --- | 0.1 % A |
| 7 | 50.0 % | --- | 49.0 | --- | 1.0 % A |
| 8 | 50.0 % | --- | 45.0 | --- | 5.0 % A |
| 9 | 50.0 % | --- | 49.9 | --- | 0.1 % C |

The compositions of Examples 1 to 9 are mixed with water and sand, in the proportions 1:0.5:3. The resulting mortars are cured at 20°C and at 95 % relative humidity. After 3, 7, 28 and 90 days the compressive strength are measured as given in Table 2 below.

*TABLE 2*

| Example | 3 days | 7 days | 28 days | 90 days |
|---|---|---|---|---|
| | | *in MPa* | | |
| 1 | 50. | 55.7 | 65.4 | 70.2 |
| 2 | 51.4 | 56.9 | 66.6 | 31.3 |
| 3 | 50.8 | 55.7 | 66.0 | 11.0 |
| 4 | 40.7 | 44.3 | 55.1 | 59.7 |
| 5 | 5.6 | 7.9 | 10.2 | 11.7 |
| 6 | 0.2 | 3.1 | 4.7 | 7.8 |
| 7 | 20.2 | 27.7 | 31.2 | 34.6 |
| 8 | 20.7 | 28.9 | 32.6 | 35.2 |
| 9 | 19.7 | 25.4 | 30.6 | 32.4 |

The mortars so produced have good finishability and exhibit no cracking or crazing (after 1 week in the absence of wet curing).

In comparison to mortars made with traditional cementitious materials such as lime and/or Portland cement, the mortars of Examples 1 to 9 showed no deterioration after 6 months immersion at 5°C in 10% $MgSO_4$ or 30% $CaCl_2$ solutions.

**Examples 10 to 19**

The mixtures of Examples 1 to 9 shown in Table 1 are mixed with 50 % water to form a flowable cementitious paste (a grout).

Such grouts are used to fill an inner masonry wall to fill existing voids. After 1 week, the wall is cut and the sectioned specimens are visually appraised.

The grouts perform well in filling the voids.

**Examples 20 to 26**

Cementitious mixes are prepared as given in Table 3 below.

EP 0 384 898 B1

*TABLE 3*

| | | *Pozzolan* | | |
| *Example* | *Aluminous cement* | *Volcanic earth* | *Fly ash* | *Silica fume* |
|---|---|---|---|---|
| *20* | *90.0 %* | *10.0 %* | --- | --- |
| *21* | *90.0 %* | --- | *10.0%* | --- |
| *22* | *90.0 %* | --- | --- | *10.0%* |
| *23* | *80.0 %* | --- | *20.0%* | --- |
| *24* | *30.0 %* | --- | *70.0%* | --- |
| *25* | *10.0 %* | --- | *90.0%* | --- |
| *26* | *50.0 %* | --- | *50.0%* | --- |

The mixtures shown in Table 3 are mixed with 50 % water to form a flowable cementitious paste (a grout). Such grouts are used to fill an inner masonry wall to fill existing voids. After 1 week, the wall is cut and the sectioned specimens are visually appraised.

The grouts perform well in filling the voids.

**Claims**

1. Use as a cement paste or grout for cement injection into core walls or as a jointing or rendering mortar for masonry constructions of a cementitious composition which is free of Portland cement and which comprises

   a) 10-90 % by weight of an aluminous cement which contains 30-85 % combined $Al_2O_3$; and

   b) 10-90 % by weight of a finely ground natural or artificial pozzolan having a silica content of more than 30 % by weight, a combined CaO content lower than 10 % by weight and a free CaO content of less than 1 % by weight..

2. Use according to claim 1, in which the cementitious composition contains from 0.01-5 % by weight of organic fibres

3. Use according to claim 2 in which the organic fibres are selected from polyacrylonitrile fibres, polyacrylic fibres, polyolefin fibres, polypropylene fibres, cellulose and wool.

4. Use according to claim 1 or claim 2, in which the cementitious composition is free of $Ca(OH)_2$ and CaO.

5. Use acording to any one of the preceding claims in which the cementitious composition contains one or more additional chemical admixtures selected from

   1) plasticizers
   2) superplasticizers
   3) air entraining agents
   4) retarders
   5) water reducers and
   6) accelerators.

5

6. A cement paste or grout for cement injection into core walls or a jointing or rendering mortar for masonry constructions comprising a cementitious composition as described in any one of claims 1-5 and water having a ratio of water to cementitious composition of 0.2 to 1.

7. A cement paste or grout or a jointing or rendering mortar according to claim 6, comprising a cementitious composition according to any one of claims 1-5, sand and water, having a ratio of water to cementitious composition of 0.2 to 1 and a ratio of sand to cementitious composition of 0.5 to 4.

8. A dry premixed mortar comprising a cementitious composition as described in any one of claims 1-5 and aggregate, the ratio of aggregate to cementitious composition being in the range of 4:1 to 0.5:1.

**Patentansprüche**

1. Verwendung einer Zementzubereitung, welche kein Portlandzement und
    a) 10 bis 90 Gewichtsprozent eines Aluminatzements, der 30 bis 85 % gebundenes $Al_2O_3$ enthält, und
    b) 10 bis 90 Gewichtsprozent eines feingemahlenen, natürlichen oder künstlichen Puzzolans mit einem Silicagehalt über 30 Gewichtsprozent, einem Gehalt an gebundenem CaO unter 10 Gewichtsprozent und einem Gehalt an freiem CaO unter 1 Gewichtsprozent
   enthält, als Zementpaste oder Giessmörtel für Injektion in Hohlräume von Mauern oder als Fugen- oder Putzmörtel für gemauerte Konstruktionen.

2. Verwendung gemäss Anspruch 1, worin die Zementzubereitung von 0,01 bis 5 Gewichtsprozent organische Fasern enthält.

3. Verwendung gemäss Anspruch 2, worin die organischen Fasern aus Polyacrylnitril-, Polyacryl-, Polyolefin- und Polypropylenfasern, Cellulose und Wolle ausgewählt werden.

4. Verwendung gemäss Anspruch 1 oder 2, worin die Zementzubereitung kein $Ca(OH)_2$ oder CaO enthält.

5. Verwendung gemäss einem der vorhergehenden Ansprüche, worin die Zementzubereitung eine oder mehrere zusätzliche chemische Zusatzmittel enthält, ausgewählt aus

| 1) Verflüssiger | 2) Superverflüssiger |
|---|---|
| 3) Luftporenbildner | 4) Verzögerer |
| 5) Wasser reduzierende Mittel | 6) Beschleuniger |

6. Eine Zementpaste oder Giessmörtel für Injektion in Hohlräume von Mauern oder ein Fugen- oder Putzmörtel für gemauerte Konstruktionen, enthaltend eine Zementzubereitung wie beschrieben in einem der Ansprüche 1 bis 5 und Wasser, wobei das Verhältnis von Wasser zu Zementzubereitung von 0,2 bis 1 beträgt.

7. Eine Zementpaste oder Giess-, Fugen- oder Putzmörtel gemäss Anspruch 6, enthaltend eine Zementzubereitung gemäss einem der Ansprüche 1 bis 5, Sand und Wasser, wobei das Verhältnis von Wasser zu Zementzubereitung von 0,2 bis 1 und das Verhältnis von Sand zu Zementzubereitung von 0,5 bis 4 beträgt.

8. Ein vorgemischter Trockenmörtel, enthaltend eine Zementzubereitung wie beschrieben in einem der Ansprüche 1 bis 5 und Aggregat, wobei das Verhältnis von Aggregat zu Zementzubereitung im Bereich von 4:1 bis 0,5:1 liegt.

**Revendications**

1. Utilisation comme pâte de ciment ou coulis pour injection de ciment à l'intérieur des murs ou comme mortier de joints ou de fonds d'enduits, destinés aux constructions en maçonnerie, d'une composition à base de ciment qui est exempte de ciment Portland et qui comprend

a) de 10 à 90% en poids d'un ciment alumineux qui contient de 30 à 85% de $Al_2O_3$ combiné, et

b) de 10 à 90% en poids de pouzzolanes naturelles ou artificielles finement broyées ayant une teneur en silice supérieure à 30% en poids, une teneur en CaO combiné inférieure à 10% en poids et une teneur en CaO libre inférieure à 1% en poids.

2. L'utilisation selon la revendication 1, caractérisée en ce que la composition à base de ciment contient de 0,01 à 5% en poids de fibres organiques.

3. L'utilisation selon la revendication 2, caractérisée en ce que les fibres organiques sont choisies parmi les fibres de polyacrylonitrile, les fibres polyacryliques, les fibres de polyoléfines, les fibres de polypropylène, la cellulose et la laine.

4. L'utilisation selon la revendication 1 ou 2, caractérisée en ce que la composition à base de ciment est exempte de $Ca(OH)_2$ et de CaO.

5. L'utilisation selon l'une quelconque des revendications précédentes, caractérisée en ce que la composition à base de ciment contient un ou plusieurs adjuvants chimiques supplémentaires choisis parmi:

1) les plastifiants,

2) les superplastifiants,

3) les agents entraîneurs d'air,

4) les retardateurs de prise,

5) les réducteurs d'eau et

6) les accélérateurs.

6. Pâte de ciment ou coulis pour injection de ciment à l'intérieur des murs ou mortier de joints ou de fonds d'enduits, destinés aux constructions en maçonnerie, comprenant une composition à base de ciment telle que décrite à l'une quelconque des revendication 1 à 5 et de l'eau, le rapport de l'eau à la composition à base de ciment étant de 0,2 à 1.

7. Pâte de ciment ou coulis ou mortier de joints ou de fonds d'enduits selon la revendication 6, comprenant une composition à base de ciment selon l'une quelconque des revendications 1 à 5, du sable et de l'eau, le rapport de l'eau à la composition à base de ciment étant de 0,2 à 1 et le rapport du sable à la composition à base de ciment étant de 0,5 à 4.

8. Un mortier sec pré-mélangé comprenant une composition à base de ciment telle que décrite à l'une quelconque des revendications 1 à 5 et un granulat, le rapport du granulat à la composition à base de ciment étant de l'ordre de 4:1 à 0,5:1.